Europäisches Patentamt

European Patent Office

Office européen des brevets

(11) Publication number: **0 183 778**
**B1**

(12) **EUROPEAN PATENT SPECIFICATION**

(45) Date of publication of patent specification: **11.10.89**

(51) Int. Cl.⁴: **H 02 G 15/00, H 02 G 15/196, H 02 G 15/10**

(21) Application number: **85902795.5**

(22) Date of filing: **10.05.85**

(86) International application number:
**PCT/US85/00879**

(87) International publication number:
**WO 86/00178 03.01.86 Gazette 86/01**

(54) **FORCED ENCAPSULATION MEANS.**

(30) Priority: **11.06.84 US 619266**

(43) Date of publication of application:
**11.06.86 Bulletin 86/24**

(45) Publication of the grant of the patent:
**11.10.89 Bulletin 89/41**

(84) Designated Contracting States:
**BE DE FR GB IT NL SE**

(56) References cited:
**DE-A-2 539 325**
**DE-A-2 555 305**
**FR-A-2 176 696**
**GB-A- 14 496**
**GB-A-2 099 639**
**US-A-2 463 231**
**US-A-4 466 843**

(73) Proprietor: **AMERICAN TELEPHONE AND TELEGRAPH COMPANY**
**550 Madison Avenue**
**New York, NY 10022 (US)**

(72) Inventor: **MULLIN, Francis, Joseph**
**4124 Admiral Way**
**Chamblee, GA 30341 (US)**
Inventor: **REED, William, Cogel**
**3966 Secluded Circle**
**Lilburn, GA 30247 (US)**

(74) Representative: **Johnston, Kenneth Graham et al**
**AT&T (UK) LTD. AT&T Intellectual Property Division 5 Mornington Road**
**Woodford Green Essex, IG8 OTU (GB)**

## Description

### Field of the invention

This invention pertains to apparatus for forming an enclosure around a substrate, the enclosure adapted to maintaining therein a pressurized liquid, and to methods for forming such enclosure. The invention is particularly useful for encapsulating cable joints or splices.

### Background of the invention

The need to protect a substrate from harmful environmental influences arises in many areas of technology. One general solution to the problem comprises surrounding the substrate with an appropriate encapsulant.

For instance, when the substrate region to be protected comprises a joint or splice between electrical cables, such as multiconductor communications cables of the type used in telephone systems, a prior art technique comprises providing an enclosure around the splice work, securing the enclosure to each cable entering the enclosure, and filling the enclosure with an insulating liquid curable encapsulant. The enclosure obviously has to be sufficient leak-tight to prevent substantial loss of encapsulant during the time the encapsulant remains liquid.

US—A—2463231 describes a method of making cable joints in sliding over the joint an elastic radially distensible tubular mold, extruding into the space between the mold and the conductor a thermoplastic resin and applying pressure after the mold has been filled so as to radially distend the mold elastically. Two metal strips are attached to the mold to cause the distended mold to assume a shape elliptical in cross section after removal of the extrusion gun.

FR—A—2176696 describes a joint enclosure consisting of a chamber which is filled under pressure with a self-hardening filling material. A metallic protection for the accomplished enclosure can optionally be applied.

DE—A—2555305 describes a rigid containment for a cable closure system, which is filled under pressure with a self-curing filling material.

GB—A—14496 describes a rigid containment for a cable closure system, which is filled under pressure with a cool-hardening material.

In prior art systems of this type the encapsulant is universally introduced by pouring it into the enclosure under gravity. The encapsulant is thus essentially at ambient pressure. It flows to fill voids and interstices, but, being relatively viscous, does not penetrate far, if at all, into the cable ends. Also, trapped air pockets and other voids tend to remain. The main function of the encapsulant generally being protection of the conductors against contact with water, it is easily seen that such imperfections may tend to impair the effectiveness of the encapsulant. Water can enter a splice region through an enclosure imperfection or through one of the cables, in the latter case travelling from a point of damaged cable sheathing, along the conductors, to the splice region. Thus, encapsulant that does not, or does only to a limited extent, penetrate into the cable ends and/or interstices within the splice work, may not provide a sufficiently effective protection against water damage to the splice.

In a particular prior art system, a plastic liner is placed around the splice work and secured to the cables, thereby forming an enclosure into which liquid encapsulant is poured under gravity. The encapsulant in the enclosure is pressurized to some degree by wrapping ties, tape or the like, around the enclosure. In such a system, any encapsulant volume change subsequent to the wrapping leads to a change in pressure. For instance, flow of encapsulant into voids within the splice work, or into the cables, decreases the effective volume of encapsulant within the enclosure, and results in a loss of pressure. Furthermore, in such a system, the splice work is being compacted by the pressurizing means.

Since encapsulation is widely used, especially in the telecommunications industry, an approach that substantially retains the advantages of the prior art approach, e.g., convenience, re-enterability, and economy, while increasing the effectiveness of encapsulant in preventing water-induced damage to the substrate, would be of considerable interest. This application discloses such an approach.

The above-described approach to protecting a substrate is not the only one known to the art. For instance, U.S. Patent 3,466,384 discloses a cable joint enclosed by an impermeable sleeve. And U.S. Patent 4,209,352 discloses a method for sealing a closure member to a substrate using an inflatable bag or the like.

### Glossary of terms

A "substrate" herein is any material object, or part thereof, that is to be protected by means of an encapsulant, the encapsulant to be introduced into an enclosure that surrounds the substrate and to be retained therein until at least a part of the encapsulant has gelled, cured, or otherwise sufficiently increased in viscosity.

A "cable" herein is an article comprising a multiplicity of elongated bodies, typically metallic bodies (conductors) but including also dielectric bodies of the type used as optical fibers, and further comprising a dielectric sheath surrounding the elongated bodies. It is to be understood that cables typically also comprise other constituents, such as coatings or insulation around the individual fibers or conductors, strength members, metallic shielding, and filling material. Examples of cables according to the definition are multiconductor communications cables, e.g., telephone cables, and so-called distribution wire and service wire used in telephone systems. Further examples are coaxial cables of the type used in CATV systems, power cables, including cable containing power distribution wire or service wire, and optical fiber transmission or distribution cable. Cable containing service wire typically is used to connect a customer to a distribution system, and cable containing distribution wire is typically used to branch a higher-capacity cable. Cable according to the definition can be adapted to be below ground by direct burial or in buried conduit, or to be maintained above ground.

By "solidifying" or "curing" of the encapsulant is meant herein any process that results in a substantial increase of the room temperature viscosity of the encapsulant, typically, to about $10^5$ cps (from an initial viscosity of the order of $10^2$ cps). Typical stiffening processes are gellation and cross linkage.

The "ambient" pressure is about 1 bar.

According to the present invention there is provided a cable splice closure system as defined in claim 1.

The preferred embodiment of the invention provides means for enclosing a substrate, typically a substrate comprising at least part of a cable, preferably comprising parts of at least two multiconductor communications cables and the joint or splice between them. The means comprise first means that are adapted for being caused to envelope the substrate, and for being sealed to the substrate, to thereby form containment means adapted for receiving therein liquid encapsulant, and for containing the liquid encapsulant under a pressure that is substantially greater than ambient pressure, typically by at least about 1 psi ($0,07$ kg/cm$^2$). The containment means are adapted for maintaining the pressure above ambient pressure, typically a substantially constant pressure, for at least a time sufficient for at least a part of the encapsulant within the containment means to solidify. The solidified encapsulant can then perform a gasketing function around the substrate and/or the parts thereof, e.g., around the conductors of a telephone cable.

The first means comprise a sheet of elastomer. The sheet can be placed around the substrate by wrapping it around the splice work between two cables, fastening part of the sheet to an appropriate opposed part of the sheet to thereby form a substantially tubular structure. Bag-like containment means, also referred to herein as a containment bag, are formed by securing the ends of the tubular structure to the respective cables, e.g., by adhesive and/or mechanical means. The thus formed containment bag comprises means for introducing therein liquid encapsulant, and can be pressurized, e.g., by pumping encapsulant into the bag.

The elastic containment bag is totally enclosed in a rigid enclosure, which serves to protect the bag as well as to limit the expansion of the bag under pressure. Filling the bag with liquid encapsulant and pressurizing the encapsulant expands the containment bag, ensures formation of a substantial layer of encapsulant between the substrate and the walls of the containment bag, and urges encapsulant into voids and interstices in the splice work. Typically, it also forces encapsulant some distance into the cables, typically resulting, after cure of the encapsulant, in improved resistance of the thus encapsulated substrate (e.g., a cable splice) against water intrusion, due to the improved gasketing ability of the inventive system, as compared to similar prior art (nonforced encapsulation) systems.

The improved gasketing ability is, inter alia, due to the fact that the cured encapsulant typically is under a compressive load. Many cables comprise materials with which it is difficult or impossible to form an adhesive bond, e.g., polyethylene. Compressively loaded cured encapsulant, urged by the load against any surface it contacts, can resist water intrusion along surfaces with which the encapsulant does not form an adhesive bond, thus forming a compressively reinforced gasket.

A further advantage of the inventive method resides in the fact that the splice work geometry generally is not altered during encapsulation. In particular, it is generally advantageous for the splice work to remain relatively loosely packed, thereby facilitating the flow of encapsulant into the splice work. In a system according to the invention, pressurization of the encapsulant typically does not disturb the splice work arrangement.

And a still further advantage of a system according to the invention is that it is generally easy to inject more encapsulant into the containment means, should the need arise. For instance, should an abnormally large volume of encapsulant penetrate into the cables, causing a drop of pressure within the containment bag, additional encapsulant can be pumped into the bag, thereby increasing the pressure again to the desired level.

The invention can be practiced with prior art encapsulants (e.g., an encapsulant of the type disclosed in U.S. Patent 4,168,258) which typically have a relatively short cure time. However, it is advantageous to practice the invention with encapsulants having a relatively long cure time.

Although the invention is advantageously used for enclosing a cable splice or joint, it has other cable gasketing applications as well. For instance, it can be used to enclose a damaged cable region, to enclose a cable end or termination, or to form a pressure block. The invention can be used with a variety of cable types, including air core and filled cable.

Disclosed is also a method for enclosing a substrate, the method comprising forming an enclosure around the substrate, the enclosure adapted for maintaining therein a quantity of liquid encapsulant under a pressure substantially greater than ambient pressure, introducing the encapsulant into the enclosure, and pressurizing the encapsulant.

Brief description of the drawings

Fig. 1 schematically depicts an elastomer sheet that can be used to form a containment bag;

Fig. 2 schematically shows a partially completed containment bag around the splice between two cables; and

Fig. 3 schematically depicts a splice according to the invention enclosed in a reinforcing shell.

. Analogous features in different Figures are identified by identical numerals.

Detailed description

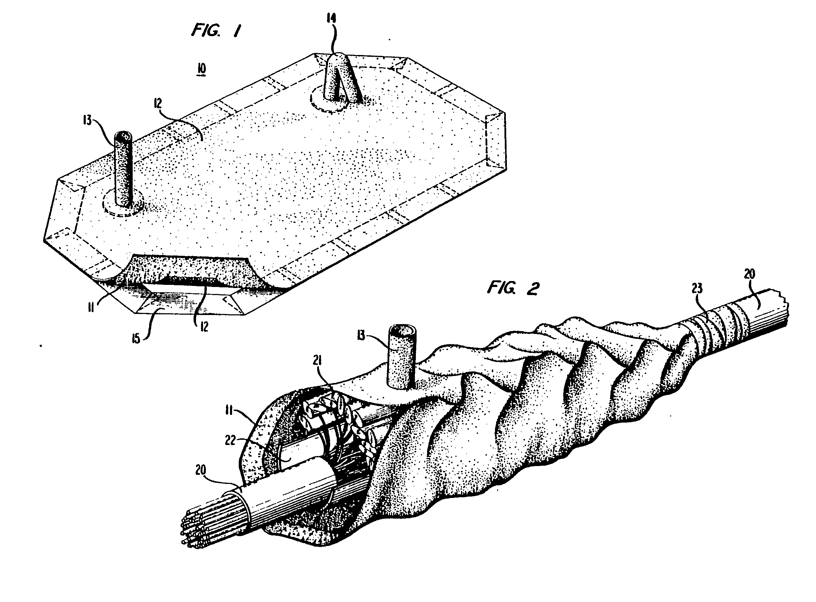

The invention will now be further explained in terms of a particular examplary and preferred embodiment. Fig. 1 schematically depicts a sheet 10 from which a containment bag according to the invention can be formed. The sheet comprises elastomer material, e.g., 0.03 inches thick neoprene, cut into generally rectangular shape, with the corners removed for easy securing to the spliced cables. A circumferential strip 11 of the material carries on one side a pressure-sensitive butyl-rubber-based mastic coating, protected by peel-off paper 15 from inadvertent contact. The remaining area 12 of the sheet is free of adhesive. A polyurethane pouring port 13 extends through an aperture in the sheet and is affixed to the sheet by appropriate means, e.g., pressure-sensitive rubber-based adhesive. Fig. 1 also shows a pressure indicator 14, in this case a simple elastomer finger. Use of a pressure indicator is optional.

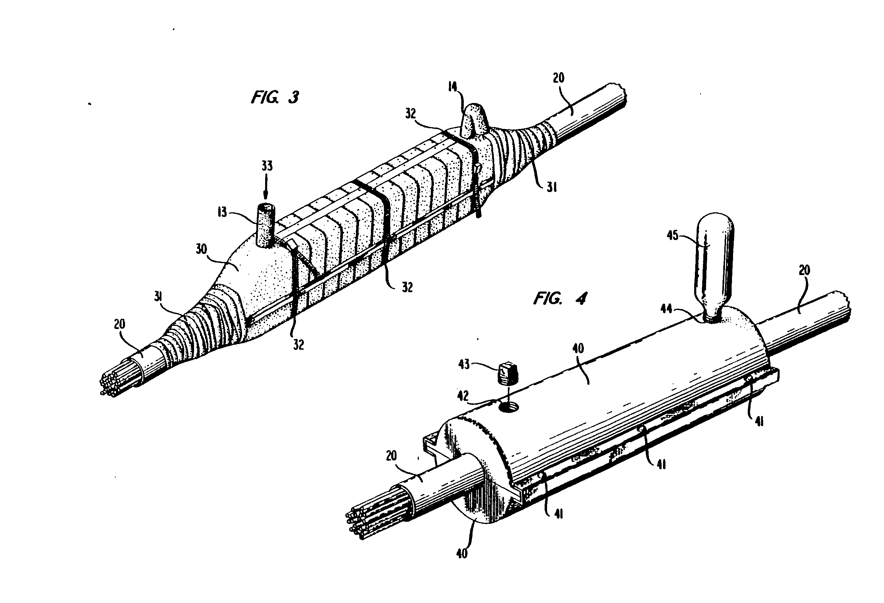

Fig. 2 schematically shows two cable ends 20, with insulated conductors extending beyond the cable sheath, the conductors connected electrically by means of connectors 21, shown schematically only. The totality of wires, connectors, and other splice-related hardware of a cable splice is often referred to as the splice work. The splice work rests in a tray 22, which typically is attached to the cable ends (not shown), and is shown partially enclosed by a partially formed containment bag according to the invention. The bag is produced by wrapping the elastomer sheet around the splice work, removing lengths of peel-off paper from opposing sheet portions and pressing the thus exposed opposed adhesive-covered regions together, thereby joining them. Fig. 2 also shows pour spout 13 extending outward from the splice region.

The bag is completed by joining the remaining edge portions together or to the cable, in a manner that will be readily understood by those skilled in the art. The absence of the sheet corners makes it easier to neatly secure the bag to the cables. Although it may be possible to form a relatively strong adhesive bond between the sheet material and the cable sheath, it is typically advantageous to further secure the bag/cable joint by additional mechanical means, e.g., tape or ties 23, tightly applied around the joint region.

After completion of containment bag formation it is considered advantageous to pressurize the bag by forcing air into it, thereby testing the tightness of the enclosure.

The containment bag is totally enclosed in a reinforcing protective rigid enclosure 30, as is shown in Fig. 3. Hinged polypropylene shell 30 is placed around the bag, with pour spout 13 and optional pressure indicator 14 extending through openings in the shell. After closing the shell and securing it closed by means of ties 32 or other mechanical means, tape seals 31 are formed between the shell and the cables 20, and liquid encapsulant 33 can be introduced. Encapsulants are well known in the art (see, for instance, U.S. Patent 4,168,258).

The liquid encapsulant can be introduced into the containment bag by any appropriate means, provided it is possible to pressurize the inside of the bag to a pressure substantially above ambient pressure, typically at least about 1 psi above ambient, e.g., about 5 or 10 psig or even higher, and to maintain the pressure on the encapsulant substantially above ambient, typically close to the initial pressure, for an effective time, typically a time sufficient to result in at least partial solidification of the encapsulant, e.g., until the encapsulant in the spout has solidified, thereby forming a "plug" that serves to prevent escape of still liqiud encapsulant through the pour spout.

A simple procedure for introducing the encapsulant is to gravity-feed a first portion of the material into the pour spout, and then force-feed further material into the spout, e.g., by means of a peristaltic hand pump. Increasing the pressure inside the shell sufficiently above ambient pressure causes pressure-indicating finger 14 to become erect. Of course, other pressure-indicating means can be used in the practice of our invention, and those skilled in the art will be able to choose those known means best suited to their particular embodiment. Furthermore, our invention can be practiced without use of pressure-indicating means. If the force-feeding means are to be removed prior to gelling of the encapsulant in the pour spout, the pour spout is to be clamped off or otherwise closed.

As will be appreciated by those skilled in the art, a pressurized elastic containment bladder is able to maintain internal pressure in the face of a limited volume decrease due to encapsulant flow. Therefore, external pressure-maintaining means are typically not required with embodiments that use elastic encapsulant-containing means.

As indicated, an important aspect of the invention is the provision of means that makes possible maintenance of the liquid encapsulant under pressure. Such maintenance results, inter alia, in compression of air trapped in the fluid encapsulant, sufficient to force encapsulant through channels to fill voids in the splice and the cables. The use of the outer enclosure, as shown for instance in Fig. 3, results in preloading of the outer enclosure with the containment bag being prevented from expanding further by the rigid enclosure, this effect providing compressive reinforcement of the cured encapsulant. All of these effects serve to make gasketing encapsulants according to the invention typically more resis-

tant to water intrusion than prior art (gravity-filled encapsulation) systems. Since water intrusion can lead to substrate damage such as conductor corrosion, resistive faults at the connectors, or other electrical and mechanical problems, communication systems using forced encapsulation according to the invention are typically less subject to such problems than prior art systems.

The water intrusion resistance of forced encapsulation splices can typically be further improved if the encapsulant is appropriately tailored in cure time and viscosity to the needs of forced encapsulation. An encapsulant suitable for the practice of the invention also advantageously is compatible with cable filling compounds. Forced encapsulation systems according to the invention can also be used with air core cables, although in such application it may be desirable to plug the cable, or otherwise prevent excessive encapsulant movement into the cable.

## Claims

1. A cable closure system comprising expandable means (10) for surrounding a part of at least one cable (20), for being sealed to the cable, and for receiving and containing liquid encapsulant (via 13) at greater than ambient pressure, the pressurized encapsulant serving to expand the body of the containment means, said encapsulant being of a type whose viscosity increases with time until at least part of the encapsulant is no longer a liquid at room temperature, characterised in that the closure system further comprises a rigid enclosure (30) totally enclosing the said body and acting to limit any further expansion of the said body.

2. System in accordance with claim 1, characterised in that the first pressure is at least about 0.07 kg/cm² above ambient pressure.

3. System in accordance with claim 1 and 2, characterised in that the expandable means comprise an elastomer sheet (12) adapted for being formed into a bag-like structure to form the containment body, the sheet comprising means (13) adapted for introducing the liquid encapsulant into the bag-like structure.

4. System in accordance with claim 3, characterised in that part of the surface of the elastomer sheet carries pressure-sensitive adhesive means (11).

5. System in accordance with claims 3 or 4, characterised in that the bag-like structure comprises a pressure-indicator (14).

6. System in accordance with claims 3, 4 or 5 characterised in that the encapsulant-introduction means is of a type that permits further introduction of a liquid into the containment body after introduction and pressurization therein of liquid encapsulant.

7. System in accordance with claim 6, characterised in that the liquid is the encapsulant.

8. A method for enclosing a part of at least one cable, said method comprising surrounding the said part with expandable means, sealing the expandable means to the cable to form a containment body around the said part, and inserting liquid encapsulant at greater than ambient pressure into the containment body in order to expand the said body, said encapsulant being of a type whose viscosity increases with time until at least part of the encapsulant is no longer a liquid at room temperature, characterised in that prior to insertion of the encapsulant the said body is totally enclosed in a rigid enclosure which acts as a limit for further expansion of the said body.

9. Method in accordance with claim 8, characterised in that the said part to be enclosed comprises a section of each of at least two cables and a splice between the two cables, the containment body is formed by a process that comprises wrapping an elastomer sheet around the splice and fastening the sheet to itself, thereby forming a substantially tubular structure surrounding at least the splice, and securing the tubular structure to each of the two cables, thereby forming the body for containing the encapsulant.

10. Method in accordance with claim 9, characterised in that the elastomer sheet has adhesive material precoated on selected portions thereof.

## Patentansprüche

1. Kabelverschlußsystem mit folgenden Merkmalen:
eine ausdehnbare Vorrichtung (10) ist zum Umgeben eines Teils mindestens eines Kabels (20), zur abgedichteten Verbindung mit diesem und zum Empfang und Aufnahme eines flüssigen Einkapselungsmittels (über 13) bei höherem als dem Umgebungsdruck vorgesehen;
das unter Druck stehende Einkapselungsmittel dient zur Ausdehnung des Körpers der Umschließungseinrichtung;
das Einkapselungsmittel ist derart, daß die Viskosität mit der Zeit zunimmt, bis mindestens ein Teil des Einkapselungsmittels keine Flüssigkeit bei Raumtemperatur mehr darstellt,
gekennzeichnet durch folgende Merkmale:
das Verschlußsystem weist ferner einen steifen Verschluß (30) auf, welches den besagten Körper gänzlich einschließt und dahingehend wirkt, daß jede weitere Expansion des besagten Körpers beschränkt wird.

2. System nach Anspruch 1, dadurch gekennzeichnet, daß der erste Druck mindestens ungefähr 0,07 kg/cm² über dem Umgebungsdruck liegt.

3. System nach Anspruch 1 und 2, dadurch gekennzeichnet, daß die ausdehnbare Einrichtung eine Elastomer-Folie (12) aufweist, die zur Formung in eine beutelähnliche Struktur ausgebildet ist, um den Umschließungskörper zu bilden, und daß die Folie eine Einrichtug (13) zur Einführung des flüssigen Einkapselungsmittels in die beutelähnliche Struktur aufweist.

4. System nach Anspruch 3, dadurch gekennzeichnet, daß ein Teil der Oberfläche der Elastomer-Folie eine auf Druck ansprechende Klebeeinrichtung (11) trägt.

5. System nach Anspruch 3 oder 4, dadurch gekennzeichnet, daß die beutelähnliche Struktur einen Druckindikator (14) aufweist.

6. System nach Anspruch 3, 4 oder 5, dadurch gekennzeichnet, daß die Einrichtung zur Einführung des Einkapselungsmittels derart ausgebildet ist, daß sie die weitere Einführung einer Flüssigkeit in den Abschlüßkörper ermöglicht, nachdem das flüssige Einkapselungsmittel eingeführt und unter Druck gesetzt ist.

7. System nach Anspruch 6, dadurch gekennzeichnet, daß die Flüssigkeit das Einkapselungsmittel ist.

8. Verfahren zum Umschließen eines Teils von mindestens einem Kabel mit folgenden Maßnahmen:

dieser Teil wird mit einer ausdehnbaren Einrichtung umgeben, die ausdehnbare Einrichtung wird mit dem Kabel dichtend verbunden, um einen Einschlußkörper um das Teil zu bilden, flüssiges Einkapselungsmittel wird mit höherem als dem Umgebungsdruck in den Umschließungskörper eingeführt, um den Körper auszudehnen;

das Einkapselungsmittel ist derart, daß die Viskosität mit der Zeit zunimmt, bis mindestens ein Teil des Einkapselungsmittels keine Flüssigkeit mehr bei Raumtemperatur ist;

gekennzeichnet durch folgende Maßnahmen:

vor der Einfügung des Einkapselungsmittels wird der besagte Körper in einen steifen Umschluß eingeschlossen, der als Grenze für eine weitere Ausdehnung des besagten Körpers wirkt.

9. Verfahren nach Anspruch 8, dadurch gekennzeichnet, daß der einzuschließende Teil einen Abschnitt eines jeden von mindestens zwei Kabeln und eine Spleißstelle zwischen den beiden Kabeln umfaßt, daß der Umschlußkörper durch ein Verfahren erzeugt wird, welches den Schritt des Umwickelns einer elastomeren Folie um die Spließstelle und Befestigung der Folie an sich selbst umfaßt, wobei eine im wesentlichen rohrförmige Struktur gebildet wird, welche mindestens die Spleißstelle umgibt, und den weiteren Schritt der Befestigung der rohrförmigen Struktur an jedem der beiden Kabel umfaßt, wobei der Körper gebildet wird, welcher das Einkapselungsmittel enthält.

10. Verfahren nach Anspruch 9, dadurch gekennzeichnet, daß auf vorgewählten Stellen der Elastomerfolie Klebstoffmaterial beschichtet ist.

**Revendications**

1. Un système d'enveloppement de câbles comprenant des moyens extensibles (10) prévus pour entourer une partie d'au moins un câble (20), pour être fixés au câble de façon étanche, et pour recevoir et contenir un matériau d'enrobage liquide (passant par 13) à une pression supérieure à la température ambiante, le matériau d'enrobage sous pression provoquant une dilatation du corps des moyens extensibles ou de confinement, ce matériau d'enrobage étant d'un type dont la viscosité augmente avec le temps jusqu'à ce qu'une partie au moins du matériau d'enrobage ne soit plus liquide, à la température ambiante, caractérise en ce que le système d'enveloppement comprend en outre une enceinte rigide (30) qui enferme entièrement le corps précité et limite toute dilatation ultérieure de ce dernier.

2. Système selon la revendication 1, caractérise en ce que la première pression est supérieure d'au moins environ $7 \times 10^3$ Pa à la pression ambiante.

3. Système selon les revendications 1 et 2, caractérisé en ce que les moyens extensibles comprennent une feuille d'élastomère (12) avec laquelle on peut former une structure semblable à une poche, pour former le corps de confinement, cette feuille comprenant des moyens (13) prévus pour l'introduction du matériau d'enrobage liquide dans la structure semblable à une poche.

4. Système selon la revendication 3, caractérisé en ce qu'une partie de la surface de la feuille d'élastomère porte des moyens adhésifs sensibles à la pression (11).

5. Système selon les revendications 3 ou 4, caractérisé en ce que la structure semblable à un poche comprend un indicateur de pression (14).

6. Système selon les revendications 3, 4 ou 5, caractérisé en ce que les moyens d'introduction de matériau d'enrobage sont d'un type qui permet une introduction ultérieure d'un liquide dans le corps de confinement, après l'introduction et la mise sous pression du matériau d'enrobage liquide dans ce corps.

7. Système selon la revendication 6, caractérisé en ce que le liquide est le matériau d'enrobage.

8. Un procédé pour enfermer une partie d'au moins un câble, ce procédé comprenant les opérations suivantes:

on entoure la partie précitée avec des moyens extensibles,

on fixe de façon étanche les moyens extensibles au câble pour former un corps de confinement autour de cette partie,

et on introduit un matériau d'enrobage liquide dans le corps de confinement, à une pression supérieure à la température ambiante, de façon à dilater le corps de confinement, ce matériau d'enrobage étant d'un type dont la viscosité augmente avec le temps, jusqu'à ce qu'une partie au moins du matériau d'enrobage ne soit plus un liquide à la température ambiante, caractérisé en ce que, ayant l'introduction du matériau d'enrobage, on enferme complètement le corps de confinement dans une enceinte rigide qui impose une limite à la dilatation de ce corps.

9. Procédé selon la revendication 8, caractérisé en ce que la partie à enfermer comprend une section de chaque câble parmi au moins deux câbles et une épaissure entre les deux câbles, le corps de confinement est formé par un processus qui comprend l'enroulement d'une feuille d'élastomère autour de l'épaissure et la fixation de la feuille sur elle-même, pour former ainsi une structure pratiquement tubulaire qui entoure au moins l'épaissure, et la fixation de la structure tubulaire à chacun des deux câbles, pour former ainsi le corps destiné à contenir le matériau d'enrobage.

10. Procédé selon la revendication 9, caractérisé en ce que des parties présélectionnées de la feuille d'élastomère sont pré-enduites d'un matériau adhésif.

FIG. 1

FIG. 2

FIG. 3

FIG. 4